# FASCICULE DE BREVET EUROPEEN

(11) **EP 1 984 772 B1**
(45) Date de publication et mention de la délivrance du brevet: **12.05.2010**
(21) Numéro de dépôt: 06831134.9
(22) Date de dépôt: 20.11.2006
(51) Int. Cl.: G02B 23/02, G02B 23/12

(54) **DISPOSITIF DE PRISE DE VUES A LONGUE DISTANCE**
BILDERFASSUNGSVORRICHTUNG FÜR GROSSE ENTFERNUNGEN
LONG-DISTANCE IMAGE CAPTURE DEVICE

(30) Priorité: 21.11.2005 FR 0511752
(43) Date de publication de la demande: 29.10.2008
(73) Titulaire: Yilmaz, Mehmed, 30000 Nîmes (FR); Taton, Franck, 84140 Montfavet (FR)
(72) Inventeur: Yilmaz, Mehmed, 30000 Nîmes (FR); Taton, Franck, 84140 Montfavet (FR)
(86) Numéro de dépôt international: PCT/FR2006/002539
(87) Numéro de publication internationale: WO 2007/060311

(56) Documents cités:
- EP-A- 0 512 439
- GB-A- 2 136 149
- US-A- 5 471 346

## Description

La présente invention concerne un dispositif de prise de vues à longue distance. Elle s'applique, en particulier, à la vidéo-surveillance et au renseignement.

Dans le domaine de la vidéo-surveillance, il est connu d'utiliser des objectifs zoom, ou à focale variable, pour disposer de champs optiques alternativement larges ou étroits. Cependant, les zooms possèdent une longueur focale trop faible pour de nombreuses applications où il est nécessaire de disposer d'un champ optique très limité, par exemple de quelques mètres à une distance de quelques kilomètres.

La présente invention vise à remédier à ces inconvénients. A cet effet, selon un premier aspect, la présente invention vise un dispositif de prise de vues à longue distance, caractérisé en ce qu'il comporte, successivement :
- un ensemble, formé de miroirs sphériques, possédant une première longueur focale,
- un ensemble relais optique adapté à rendre afocale la combinaison optique de cet ensemble relais optique et de l'ensemble de miroirs sphériques,
- un objectif et
- un capteur d'image placé dans le plan focal dudit objectif
   ledit ensemble relais optique étant adapté, pour au moins une longueur focale de l'objectif, à former l'image de la pupille de sortie de l'ensemble formé de miroirs sur la pupille d'entrée de l'objectif.

Grâce à ces dispositions, une très longue focale peut être obtenue, tout en utilisant un encombrement réduit et en maintenant la possibilité d'utilisation d'une focale variable, par l'intermédiaire d'un objectif zoom non spécifique et en annulant ou limitant le vignetage.

Selon des caractéristiques particulières, l'ensemble relais optique est adapté à former une image de la pupille de sortie de l'ensemble de miroirs sphériques dans l'objectif.

Selon des caractéristiques particulières, l'ensemble relais optique est à base de lentilles. Grâce à ces dispositions, on obtient un système optique moins onéreux, présentant une meilleure définition et une plus grande compacité qu'un ensemble relais optique formé à base de miroirs. L'emploi de lentilles permet notamment de relâcher les tolérances de fabrication et de montage ainsi que de diminuer l'encombrement du système le rendant ainsi plus abordable financièrement et techniquement, plus léger en maintenance et donc plus attractif.

Selon des caractéristiques particulières, le dispositif tel que succinctement exposé ci-dessus comporte, en amont de l'ensemble de miroirs, un ménisque formant adaptatrice.

Selon des caractéristiques particulières, l'ensemble relais optique est adapté à former une image du champ observé à l'infini dans l'espace objet de l'objectif pour obtenir l'image dans le plan focal image de l'objectif.

Selon des caractéristiques particulières, l'ensemble relais optique et l'objectif sont adaptés à effectuer une reprise d'image en avant du foyer de l'ensemble de miroirs. Grâce à chacune de ces dispositions, on réduit sensiblement l'encombrement axial du dispositif par rapport à des systèmes de reprise d'image classiques.

Selon des caractéristiques particulières, ledit objectif est un objectif à focale variable (zoom). Grâce à ces dispositions, on peut réduire ou augmenter le champ optique observé à une distance donnée.

Selon des caractéristiques particulières, le dispositif tel que succinctement exposé ci-dessus comporte un capteur de mouvement sur chaque axe, un moyen de mémorisation de positions ou de direction du dispositif et de mouvements effectués depuis un passage du dispositif dans ladite position, un moyen de déplacement et un moyen de déclenchement adapté à commander le moyen de déplacement pour, en fonction des mouvements mémorisés, positionner le dispositif dans la position ou la direction mémorisée.

Selon des caractéristiques particulières, ledit capteur de mouvement comporte un accéléromètre sur chaque axe.

Selon des caractéristiques particulières, ledit capteur de mouvement comporte un gyroscope sur chaque axe.

Selon des caractéristiques particulières, ledit capteur de mouvement comporte un moyen de traitement d'images prises par le capteur d'image adapté à effectuer une évaluation du mouvement du dispositif entre deux images.

Selon des caractéristiques particulières, le capteur comporte un intensificateur d'image, ledit objectif formant une image sur ledit intensificateur d'image et un deuxième objectif formant une image de la face de sortie de l'intensificateur d'image sur le capteur d'image.

Selon des caractéristiques particulières, le dispositif tel que succinctement exposé ci-dessus comporte un intensificateur d'image à la face de sortie duquel est accolé le capteur d'image, ledit objectif formant une image sur ledit intensificateur d'image.

Selon des caractéristiques particulières, le dispositif tel que succinctement exposé ci-dessus comporte un moyen de commutation de filtre à densité variable en aval de l'ensemble des miroirs sphériques et/ou en amont de l'intensificateur d'image et un moyen de mesure de la luminosité de l'image captée par le capteur d'image et/ou par un intensificateur d'images.

Selon des caractéristiques particulières, le dispositif tel que succinctement exposé ci-dessus comporte un moyen de masquage adapté à reconnaître des formes dans l'image captée et à masquer des parties de l'image captée en fonction de ladite reconnaissance de forme.

Selon des caractéristiques particulières, le dispositif tel que succinctement exposé ci-dessus comporte un moyen de traitement d'image et un moyen de correction de déformations d'images dues aux turbulences atmosphériques en fonction du résultat dudit traitement d'image.

Selon des caractéristiques particulières, le dispositif tel que succinctement exposé ci-dessus comporte au moins un miroir plan placé sur le chemin optique des rayons lumineux issus de l'ensemble de miroirs sphériques.

Grâce à ces dispositions, l'encombrement axial du dispositif est modulable et peut être réduit.

D'autres avantages, buts et caractéristiques de la présente invention ressortiront de la description qui va suivre, faite, dans un but explicatif et nullement limitatif en regard des dessins annexés dans lesquels :
- la figure 1 représente, schématiquement et en coupe, un système optique mis en oeuvre dans un mode particulier de réalisation du dispositif objet de la présente invention ;
- la figure 2 représente, schématiquement et en coupe, un système optique mis en oeuvre dans un mode particulier de réalisation du dispositif objet de la présente invention ;
- la figure 3 représente, sous forme d'un schéma fonctionnel, des fonctions mises en oeuvre dans un mode particulier de réalisation du dispositif objet de la présente invention et
- la figure 4 représente, schématiquement et en coupe, un système optique mis en oeuvre dans un mode particulier de réalisation du dispositif objet de la présente invention.

Dans les figures, le boîtier du dispositif n'a pas été représenté ni la totalité des rayons lumineux des schémas optiques dans un but de clarté des figures.

L'objectif (145, 245) a été représenté avec une seule focale (pupille d'entrée (155) coïncidant avec l'image de la pupille de sortie dans un but de clarté.

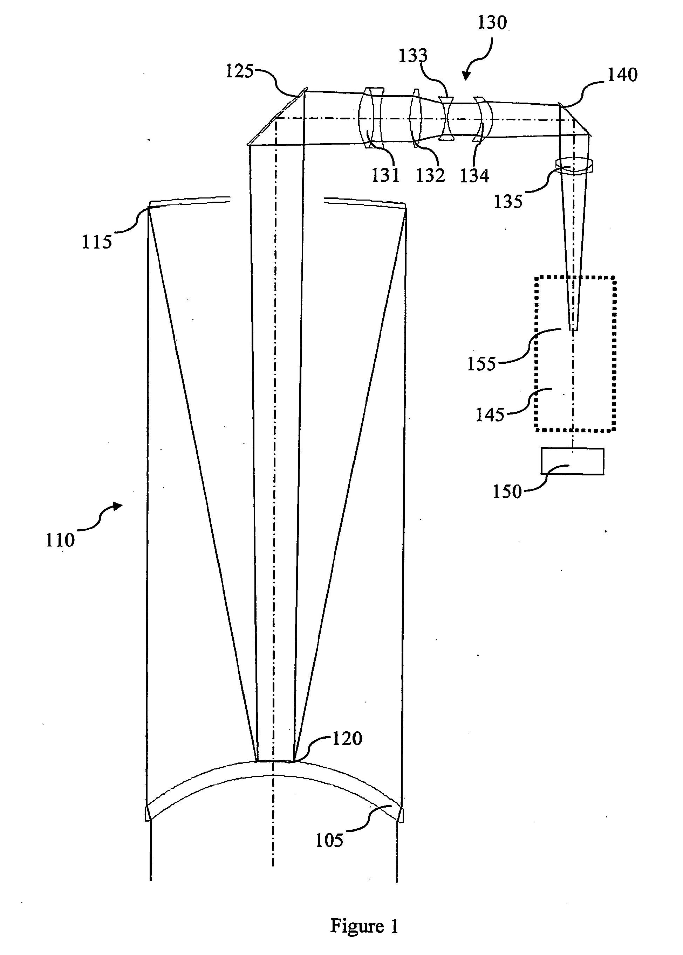

On observe, en figure 1, un dispositif de prise de vues à longue distance 100 qui comporte, successivement, sur le chemin optique des rayons lumineux :
- une lentille correctrice 105,
- un ensemble 110 de miroirs sphériques comportant un miroir primaire 115 et un miroir secondaire 120,
- un premier miroir plan 125,
- un ensemble relais optique 130 comportant des groupes de lentilles 131, 132, 133 et 134,
- un deuxième miroir plan 140,
- un groupe 135 de lentilles de l'ensemble relais optique 130,
- un objectif 145 et
- un capteur d'image 150 placé dans le plan image, ici le plan focal, de l'objectif 145.

La lentille correctrice 105 et les miroirs 115 et 120 sont de type connu dans le domaine des télescopes.

Les miroirs plans 125 et 140 servent à réduire l'encombrement axial du dispositif en formant successivement deux angles droits sur l'axe optique du dispositif.

L'ensemble relais optique 130 est adapté à former une image de la pupille de sortie de l'ensemble de miroirs sphériques dans la pupille d'entrée 155 de l'objectif 145. L'ensemble relais optique 130 est aussi adapté à former une image du champ observé à l'infini dans l'espace objet de l'objectif 145 pour obtenir l'image dans le plan focal image de l'objectif 145, à la surface du capteur d'image 150. L'ensemble relais optique 130 et l'objectif 145 sont adaptés à effectuer une reprise d'image en avant du foyer de l'ensemble de miroirs 110.

L'ensemble relais optique 130 est adapté, pour au moins une longueur focale de l'objectif, à former l'image de la pupille de sortie de l'ensemble formé de miroirs sur la pupille d'entrée de l'objectif. L'ensemble relais optique 130 est aussi adapté à former une image de la pupille de sortie de l'ensemble de miroirs sphériques dans l'objectif.

On observe que l'ensemble constitué des miroirs 115 et 120 et de l'ensemble relais optique 130 permet d'exploiter un objectif 145 à focale variable sans vignetage.

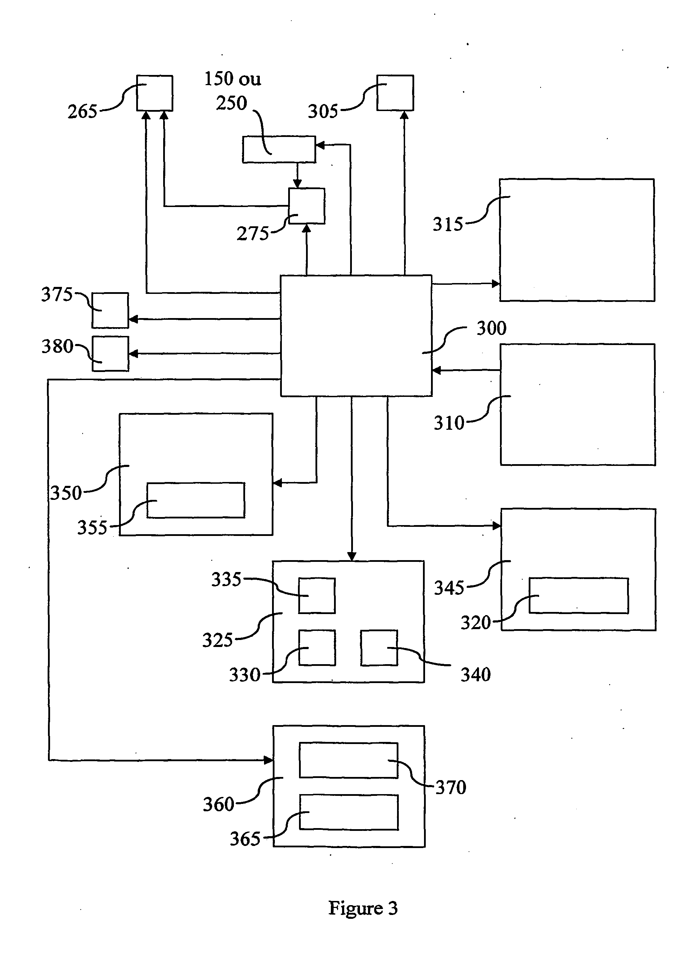

Préférentiellement, l'objectif 145 est un objectif zoom motorisé commandé par un circuit électronique, comme illustré en figure 3. L'objectif 145 n'est, préférentiellement, par spécifique à la constitution du dispositif objet de la présente invention.

Le capteur d'image 150 est adapté à délivrer un signal vidéo représentatif de l'image formée à sa surface. Il est, par exemple, constitué d'un dispositif à transfert de charges, ou DTC, connu sous le nom de CCD (acronyme de **«** charge coupled device » pour dispositif à transfert de charges, ou DTC) ou d'un capteur connu sous le nom de CMOS.

Le capteur d'image 150 et l'objectif 145 peuvent être intégré dans une caméra de type connu. Ils peuvent être munis d'une mise au point automatique selon des techniques connues. De plus, ils peuvent être muni d'un diaphragme automatique pour asservir la quantité de lumière atteignant le capteur d'image 150.

Grâce aux caractéristiques optiques de l'ensemble relais optique 130, lorsque l'on change la longueur focale de l'objectif 145, il n'est pas nécessaire de changer la mise au point de cet objectif 145.

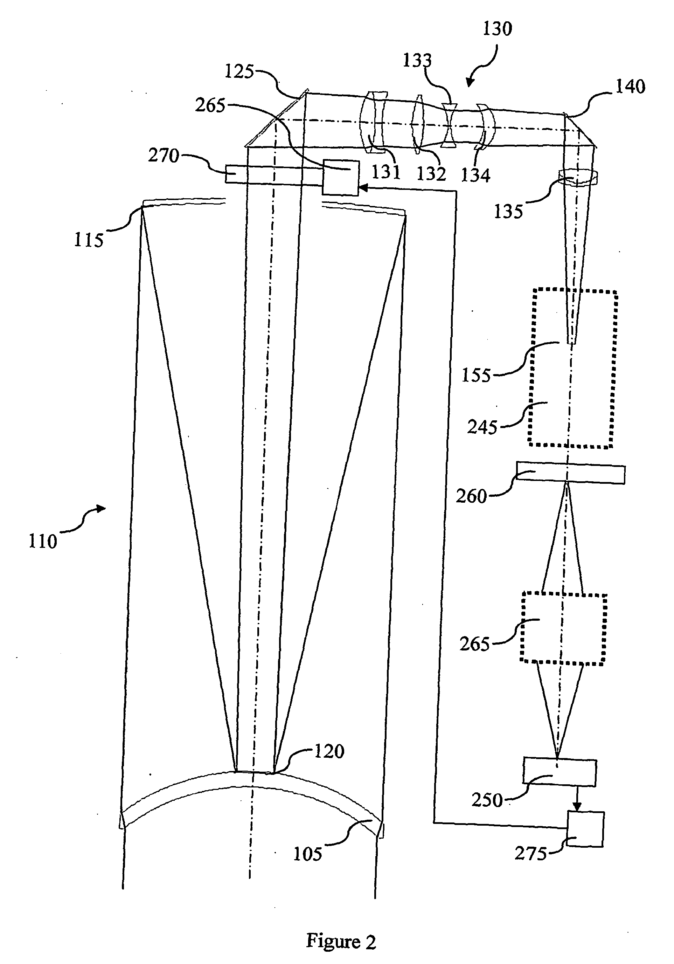

On observe, en figure 2, les mêmes éléments qu'en figure 1, à l'exception de l'objectif 145, auxquels s'ajoutent un intensificateur d'image 260 placé dans le plan image d'un objectif 245 et un deuxième objectif de reprise d'image 265 qui reprend l'image sur la face de sortie de l'intensificateur d'image 260 et en forme une image sur la face photosensible d'un capteur d'image 250.

L'objectif 245 se trouve dans la même relation optique que l'objectif 145, vis à vis de l'ensemble relais optique 130. L'objectif 245 est, cependant, adapté aux dimensions de l'intensificateur d'image 260 alors que l'objectif 145 est adapté aux dimensions du capteur d'image 150.

On rappelle qu'un intensificateur d'image est un dispositif permettant d'amplifier la quantité de photons reçus par un capteur optoélecronique pour permettre la vision en conditions de très faibles éclairements, notamment la vision nocturne.

En variante, la reprise d'image sur l'intensificateur d'image 260 est réalisée directement par collage du capteur 250 sur la face de sortie de l'intensificateur d'image 260. L'ensemble réalisé par le deuxième objectif 265 et le capteur d'image 250 est alors remplacé par le collage direct du capteur d'image 250 sur la face de sortie de l'intensificateur d'image 260. Ce type de capteur est notamment connu sous le nom de ICCD (marque déposée, acronyme de « Intensified charge coupled device » pour dispositif à transfert de charges intensifié).

Préférentiellement, le dispositif comporte un moyen de commutation 265 de filtres 270 en aval de l'ensemble miroir 110 ou en amont de l'intensificateur d'image 260 et un moyen de mesure 275 de la luminosité de l'image captée par le capteur d'image 250 ou de l'intensificateur d'image 260.

Le moyen de commutation 265 est, par exemple un moteur ou un électroaimant. Il permet de positionner rapidement un filtre 270 de haute densité (par exemple de 12 à 20) devant l'objectif 145. Préférentiellement, le filtre 270 est à densité variable sur sa surface si bien que son déplacement permet une variation progressive du filtrage appliqué.

En variante, le filtre 270 est un filtre électro-optique, par exemple à cellule à cristaux liquide ou à céramique Plomb Lanthane Zirconate dites « PLZT ». Dans ce cas, le moyen de commutation 265 est un générateur de signaux de commande d'obscurcissement du filtre, par exemple des signaux carrés alternatifs.

Le moyen de mesure 275 de la luminosité de l'image captée par le capteur d'image 250 mesure, par exemple, le nombre de points du capteur d'image 250 qui reçoivent une intensité lumineuse supérieure à un seuil prédéterminé. En variante, le moyen de mesure mesure la moyenne de l'éclairement du capteur d'image 250.

En variante, le moyen de mesure 275 mesure la luminosité de l'image captée par l'intensificateur de lumière 260, en mesurant, par exemple, la consommation liée à l'étage d'amplification de l'intensificateur 260.

En variante, le moyen de commutation 265 agit sur l'alimentation électrique de l'intensificateur d'image 260, en lui appliquant une alimentation haute tension sous forme, par exemple, de signaux carrés alternatifs (acronyme de Pulse Width Modulation pour modulation de largeur d'impulsion) dont la tension efficace est fonction de la mesure réalisée par le moyen de mesure 275.

Le moyen de mesure 275 et le moyen de commutation 265 appliquent ainsi une boucle d'asservissement en contre-réaction.

On observe que le filtrage à densité variable peut s'appliquer aussi à la figure 1, par exemple dans sa position préférentielle directement en sortie de l'ensemble de miroirs sphériques, avant le miroir 125.

En variante de chacun des modes de réalisation exposé ci-dessus, le capteur d'image est remplacé par l'oeil humain, éventuellement doté d'une optique complémentaire, l'objectif 145 ou l'objectif 265 pouvant être remplacés par un objectif adapté à la vision oculaire.

On observe, en figure 3, le capteur 150 ou 250, le moyen de mesure 275 et le moyen de commutation 265, ainsi qu'un contrôleur 300, un moteur de zoom 305, un moteur 375 de mise au point, un moteur de diaphragme 380, un clavier 310, un écran 315, un moyen de masquage 345 comportant un moyen de traitement d'image primaire 320, un capteur de mouvements 325 comportant un accéléromètre 330, un gyroscope 335 et un moyen de traitement d'image secondaire 340, un moyen de correction 350 des déformations dues aux turbulences atmosphériques comportant un moyen de traitement d'image tertiaire 355, une tourelle 360 comportant des moteurs 365 et 370.

Le contrôleur 300 est, par exemple de type microcontrôleur intégrant un microprocesseur, un DSP (acronyme de Digital Signal Processor pour processeur de signal numérique), un FPGA (acronyme de Field Programmable Gate Array pour composant numérique programmable), de la mémoire vive et de la mémoire morte conservant des programmes de fonctionnement du dispositif.

Le moteur de zoom 305 est adapté à faire varier la longueur focale de l'objectif 145 ou 245 sous la commande du contrôleur 300, agissant, lui-même, sous la commande du clavier 310 ou de commandes externes au dispositif, transmises par l'intermédiaire d'interfaces d'entrée-sortie (non représentées).

Le moteur de mise au point 375 est adapté à faire varier la distance de mise au point de la prise de vue, c'est-à-dire d'assurer la mise au point de l'image captée par le capteur d'image 150, sous la commande du contrôleur 300, selon des techniques connues.

Le moteur de diaphragme 380 permet au contrôleur 300 de contrôler la luminosité de l'image transmise au capteur d'image ou à l'intensificateur d'image 260. Cette fonction, de type connue, peut être réalisée selon le même principe de réaction que celle du filtre à densité variable.

Le clavier 310 est de type connu dans les applications industrielles. Il comporte des touches et des variateurs, par exemple sous la forme de joysticks ou de moyens de pointages, par exemple souris ou écran tactile. Il permet à l'utilisateur de commander les différentes fonctions du dispositif, notamment, le déplacement des moteurs de la tourelle 360, le moteur de zoom 305, la mémorisation d'images, la mémorisation de positions d'intérêt et le masquage.

L'écran 315 est de type connu, par exemple à cristaux liquides. Il est, préférentiellement, lié mécaniquement au clavier 310.

La tourelle 360 et les moteurs 365 et 370 sont de type connu dans le domaine de la vidéo-surveillance. En particulier, l'un des moteurs fait tourner le dispositif autour d'un axe vertical alors que l'autre de ces moteurs fait tourner le dispositif autour d'un axe horizontal.

En variante, la tourelle est de type « hexapod » (marque déposée) comportant des vérins d'orientation d'un plateau portant le dispositif objet de la présente invention.

Le moyen de traitement d'image primaire 320 est, par exemple, un logiciel conservé en mémoire du contrôleur 300. Il est adapté à effectuer des fonctions de masquage de zones privatives susceptibles de se trouver dans le champ optique du dispositif.

Trois variantes des fonctions de masquage peuvent être choisies par l'utilisateur.
Dans une première variante, le masquage est effectué manuellement. Dans ce cas, sur une image, fixe ou animée, l'opérateur définit, par la mise en oeuvre d'un dispositif de pointage, par exemple une souris, une zone de l'image à masquer et, si plusieurs zones doivent être masquées, l'opérateur définit successivement chacune des zones d'image correspondant aux masques souhaités. Les zones ainsi définies apparaissent sur l'écran sous une couleur noire (par défaut) ou définie par l'utilisateur. Les zones à masquer peuvent aussi être brouillée pour permettre à l'opérateur de suivre approximativement un élément suspect passant dans une zone masquée.

On observe qu'il existe différentes méthodes pour effectuer le brouillage de la zone à masquer. Par exemple, un traitement d'image effectue la moyenne des couleurs des points d'image dans des sous-zones de la zone à masquer.

Lorsque le masquage consiste en l'apposition d'une couleur unie sur la zone à masquer, la couleur de chaque zone à masquer peut être définie indépendamment. Une zone de flou d'une taille à définir par l'utilisateur peut également être ajoutée au contour de la zone masquée. De plus, l'opérateur peut, à tout moment, décider de rendre une zone masquée non masquée ou d'en modifier la taille ou l'apparence une fois masquée.

Lors d'un mouvement de l'image, et ce indépendamment de la connaissance du mouvement de la caméra, les zones définies masquées initialement restent masquées et ce en utilisant des fonctions de reconnaissance de la zone mettant en oeuvre une comparaison d'images successives pour déterminer le mouvement de la zone à masquer dans l'image affichée. Voir, à ce sujet, les fonctions du moyen de traitement d'image secondaire 340.

Le dispositif met en oeuvre, à cet effet, une recherche de contour par la méthode, par exemple, de recherche des gradients sur des lignes continues. Ensuite il réalise la fermeture des lignes obtenues lorsque la cohérence d'une surface est déterminée. Les lignes non fermées sont alors éliminées. Les surfaces fermées sont alors lissées ce qui permet de définir les zones a masquer automatiquement.

Lors d'utilisation de la fonction zoom, c'est-à-dire lors de la variation de la longueur focale de l'objectif, une fonction permet également la reconnaissance des zones à masquer et le dimensionnement du masque en conséquence.

Si la zone à masquer sort de l'image affichée, le masque réapparaît automatiquement lorsque la zone à masquer est de nouveau visible, par le repérage absolu, en coordonnées angulaires, des zones à masquer ou par reconnaissance des caractéristiques d'image de la zone à masquer.

Pour effectuer la reconnaissance de zone d'image à masquer, le moyen de traitement d'image primaire 320 peut aussi mettre en oeuvre une signature de cette zone, préférentiellement indépendante de la longueur focale et donc de la dimension de la zone dans l'image à afficher. Par exemple, le moyen de traitement d'image primaire 320 repère les lignes de fort contraste, ou gradient de couleur, et leur attribue des identifiant, par exemple les couleurs sensiblement unies des zones se trouvant autour de ces lignes de fort contraste.

Dans une deuxième variante, le masquage est effectué automatiquement. Dans ce cas, sur une image, fixe ou animée, l'utilisateur définit une zone sur laquelle il désire que le moyen de traitement d'image primaire 320 génère automatiquement un masque ou alors demande au moyen de traitement d'image primaire 320 de générer les masques sur toute l'image, en repérant les ouvertures, portes, fenêtres ou vitrines apparaissant sur l'image, le masque correspondant à ces ouvertures.

Le moyen de traitement d'image primaire 320 définit les zones à masquer dans l'image (zones ayant la forme d'une piscine, d'une fenêtre, d'une maison ....) et les masque en utilisant le principe décrit en regard de la première variante. L'opérateur peut à tout moment décider de rendre une zone masquée non masquée ou d'en modifier la taille, que cette zone ait été définie par lui ou par le dispositif objet de la présente invention.

Dans une troisième variante, semi-automatique, l'opérateur peut sélectionner les zones à masquer de manière manuelle comme décrit en première variante. L'opérateur peut également les définir automatiquement comme décrit en deuxième variante.

Le moyen de traitement d'image primaire 320 définit les zones à masquer dans l'image (zones ayant la forme d'une piscine, d'une fenêtre, d'une maison ....) et les masque en utilisant le principe décrit plus haut. L'opérateur peut à tout moment décider de rendre une zone masquée non masquée ou d'en modifier la taille, que cette zone ait été définie par lui ou par le moyen de traitement d'image primaire 320.

Le capteur de mouvements 325 est adapté à déterminer l'ampleur des mouvements du dispositif de prise de vues. Il comporte, ici, un accéléromètre 330, un gyroscope 335 et un moyen de traitement d'image secondaire 340, sachant que, dans des versions plus simples, seul un de ces éléments peut être incorporer au capteur de mouvement 325. Le moyen de traitement d'image secondaire est adapté à effectuer une évaluation du mouvement de l'image par mesure de déplacement de pixels.

Par l'intermédiaire du clavier 310, l'utilisateur peut provoquer la mémorisation, par le contrôleur 300, de positions du dispositif et de mouvements effectués depuis un passage du dispositif dans ladite position. Par l'intermédiaire du clavier 310, l'utilisateur peut ensuite effectuer un déclenchement de retour en position mémorisée, le contrôleur 300 provoquant alors, en fonction des mouvements mémorisés, le positionnement du dispositif dans la position mémorisée demandée, par commande des moteurs de la tourelle 360.

Le moyen de traitement d'image secondaire 340 met en oeuvre des fonctions de comparaison d'images successives prises par le dispositif pour déterminer les mouvements horizontaux et verticaux du dispositif.

Le moyen de correction 350 des déformations dues aux turbulences atmosphériques comporte le moyen de traitement d'image tertiaire 355 adapté à déterminer les déformations locales de l'image dues aux turbulences atmosphériques. Le moyen de correction 350 est adapté à corriger ces déformations en temps réel en fonction du résultat dudit traitement d'image. La correction d'image pour les déformations liées aux perturbations atmosphériques peut être réalisée de deux manières distinctes :
- soit d'après une suite d'image en effectuant une recherche de cohérence entre les images pour reformer une image unique,
- soit en appliquant sur chaque image une succession de filtres numériques adaptatifs ou pas, par exemple des filtres de type gaussien ou des filtres de convolution.

Chacune des fonctions du dispositif objet de la présente invention peut fonctionner sur un ordinateur ou bien être incorporée directement sur des composants électroniques de type microcontrôleurs ou microprocesseurs ou DSP ou FPGA ou ASICS ou tout composant programmable.

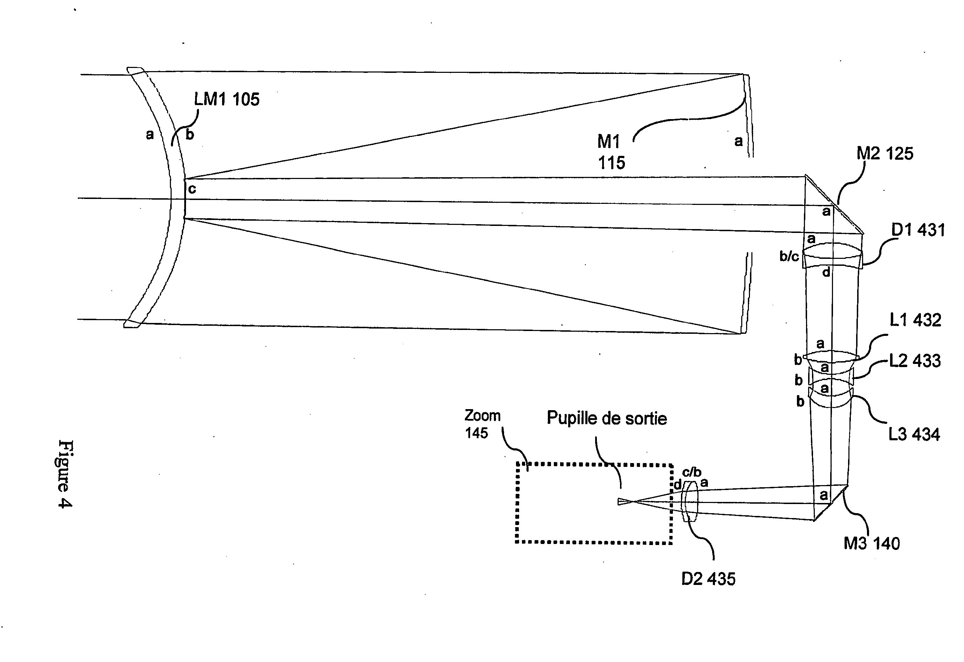

On donne, ci-après, en regard de la figure 4, des informations concernant un mode de réalisation particulier du dispositif objet de la présente invention, en deux tableaux successifs.

| référence | référence de surface | rayon de courbure (mm) | caractéristique matière | |
|---|---|---|---|---|
| | | | N_{d} | V_{d} |
| Objet | | | | |
| LM1 105 (lentille correctrice avec miroir) | a | 99,8591 | 1,52249 | 59,48 |
| | b | 103,592 | | |
| | c (partie de b) | 103,592 | | |
| Air | | | | |
| M1 115 (miroir) | a | 686,9 | - | - |
| Air | | | | |
| M2 125 (miroir) | a | plan - infini | - | - |
| Air | | | | |
| D1 431 (doublet) | a | 33,7353 | 1,62041 | 60,32 |
| | b | 58,035 | | |
| | c | 58,035 | 1,80518 | 25,36 |
| | d | 54,8028 | | |
| Air | | | | |
| L1 432 (lentille) | a | 41,1069 | 1,75513 | 27,38 |
| | b | 58,3369 | | |
| Air | | | | |
| L2 433 (lentille) | a | 22 | 1,51680 | 64,17 |
| | b | 22 | | |
| Air | | | | |
| L3 434 (lentille) | a | 15,9067 | 1,51680 | 64,17 |
| | b | 15,0394 | | |
| Air | | | | |
| M3 140 (miroir) | a | plan - infini | - | - |
| Air | | | | |
| D2 435 (doublet) | a | 28,494 | 1,51680 | 64,17 |
| | b | 16,0005 | | |
| | c | 16,0005 | 1,75513 | 27,38 |
| | d | 31,6092 | | |
| Air | | | | |
| Image de la pupille de sortie | | | | |

| référence | référence de surface | Traitement | épaisseur (mm-axe central) | diamètre (mm) | distance air (mm-axe central) |
|---|---|---|---|---|---|
| | | | | | |
| objet | | | | | 10 m à infini |
| LM1 105 (lentille correctrice avec miroir) | a | anti-reflet | 8 | 135 | |
| | b | anti-reflet sauf surface "c" | | | |
| | c (partie de b) | réfléchissant aluminium | | 25 | |
| Air | | | | | 300 |
| M1 115 (miroir) | a | réfléchissant aluminium | | 135 | |
| Air | | | | | 45 |
| M2 125 (miroir) | a | réfléchissant aluminium | | 50,8 | |
| Air | | | | | 20 |
| D1 431 (doublet) | a | anti-reflet | 8 | 32 | |
| | b | anti-reflet | | | |
| | c | anti-reflet | 3,2 | | |
| | d | anti-reflet | | | |
| Air | | | | | 45 |
| L1 432 (lentille) | a | anti-reflet | 6 | 30 | |
| | b | anti-reflet | | | |
| Air | | | | | 6 |
| L2 433 (lentille) | a | anti-reflet | 2,5 | | |
| | b | anti-reflet | | | |
| Air | | | | | 9 |
| L3 434 (lentille) | a | anti-reflet | 6 | | |
| | b | anti-reflet | | | |
| Air | | | | | 50 |
| M3 140 (miroir) | a | réfléchissant aluminium | - | 25,4 | |
| Air | | | | | 70 |
| D2 435 (doublet) | a | anti-reflet | 7 | 20 | |
| | b | anti-reflet | | | |
| | c | anti-reflet | 2 | | |
| | d | anti-reflet | | | |
| Air | | | | | 34 |
| Image de la pupille de sortie | | | | | |

## Revendications

1. - Dispositif de prise de vues à longue distance, **caractérisé en ce qu'**il comporte, successivement :
- un ensemble (110), formé de miroirs sphériques (115, 120), possédant une première longueur focale,
- un ensemble relais optique (130) adapté à rendre afocale la combinaison optique de cet ensemble relais optique et de l'ensemble de miroirs sphériques,
- un objectif à longueur focal variable (145, 245) et
- un capteur d'image (150, 250, 260, 265) placé dans le plan focal dudit objectif l'ensemble relais optiques forme une image de la pupille de sortie de l'ensemble formé des miroirs sphériques dans la pupille d'entrée (155) de l'objectif à longueur focale variable pour les différentes valeurs de focale de cet objectif zoom.

2. - Dispositif selon la revendication 1, **caractérisé en ce que** l'ensemble relais optique (130) est adapté à former une image de la pupille de sortie de l'ensemble de miroirs sphériques dans l'objectif (145, 245).

3. - Dispositif selon l'une quelconque des revendications 1 ou 2, **caractérisé en ce que** le relais optique (130) est à base de lentilles.

4. - Dispositif selon l'une quelconque des revendications 1 à 3, **caractérisé en ce qu'**il comporte, en amont de l'ensemble de miroirs (110), un ménisque formant adaptatrice (105).

5. - Dispositif selon l'une quelconque des revendications 1 à 4, **caractérisé en ce que** l'ensemble relais optique (130) est adapté à former une image du champ observé à l'infini dans l'espace objet de l'objectif (145, 245) pour obtenir l'image dans le plan focal Image de l'objectif.

6. - Dispositif selon l'une quelconque des revendications 1 à 5, **caractérisé en ce que** l'ensemble relais optique (130) et l'objectif (145) sont adaptés à effectuer une reprise d'image en avant du foyer de l'ensemble (110) de miroirs.

7. - Dispositif selon l'une quelconque des revendications 1 à 6, **caractérisé en ce qu'**il comporte au moins un miroir plan (125, 140) placé sur le chemin optique des rayons lumineux issus de l'ensemble de miroirs sphériques (110).

## Claims

1. Device for taking long-distance images, **characterized in that** it comprises, successively:
- an assembly (110), formed of spherical mirrors (115, 120), having a first focal length,
- an optical relay assembly (130) designed to render afocal the optical combination of this optical relay assembly and the spherical mirrors assembly,
- a variable focal length lens unit (145, 245) and
- an image sensor (150, 250, 260, 265) placed in the focal plane of said lens unit,
the optical relay assembly forms an image from the exit pupil of the assembly constituted of spherical mirrors on the entrance pupil (155) of the variable focal length lens unit for this lens unit's different focal values.

2. Device according to claim 1, **characterized in that** the optical relay assembly (130) is designed to form an image from the exit pupil of the spherical mirrors assembly in the lens unit (145, 245).

3. Device according to any one of claims 1 or 2, **characterized in that** the optical relay assembly (130) is based on lenses.

4. Device according to any one of claims 1 to 3, **characterized in that** it comprises, before the mirror assembly (110), a meniscus lens forming an adaptor (105).

5. Device according to any one of claims 1 to 4, **characterized in that** the optical relay assembly (130) is designed to form an image of the field observed at infinity in the object space of the lens unit (145, 245) in order to obtain the image in the image focal plane of the lens unit.

6. Device according to any one of claims 1 to 5, **characterized in that** the optical relay assembly (130) and the lens unit (145) are designed to retake the image in front of the mirror assembly (110) focus.

7. Device according to any one of claims 1 to 6, **characterized in that** it comprises at least one plane mirror (125, 140) placed on the optical path of the light rays coming from the spherical mirrors assembly (110).

## Patentansprüche

1. Bildaufnahmevorrichtung für große Entfernungen, **dadurch gekennzeichnet, dass** sie nacheinander aufweist :
- eine von sphärischen Spiegeln (115, 120) geformte Einheit (110), die eine erste Brennweite besitzt,
- eine optische Relaiseinheit (130), die geeignet ist, um die optische Kombination dieser optischen Relaiseinheit und der Einheit von sphärischen Spiegeln afokal zu machen,
- ein Objektiv mit variabler Brennweite (145, 245) und
- einen Bildsensor (150, 250, 260, 265), der in der Brennebene des Objektivs angeordnet ist
wobei die optische Relaiseinheit ein Bild der Ausgangspupille der von den sphärischen Spiegeln geformten Einheit in der Eingangspupille (155) des Objektivs mit variabler Brennweite für die verschiedenen Brennweitenwerte dieses Objektivs formt.

2. Vorrichtung nach Anspruch 1, **dadurch gekennzeichnet, dass** die optische Relaiseinheit (130) geeignet ist, um ein Bild der Ausgangspupille der Einheit von sphärischen Spiegeln im Objektiv (145,245) zu formen.

3. Vorrichtung nach einem der Ansprüche 1 oder 2, **dadurch gekennzeichnet, dass** das optische Relais (130) auf Linsen basiert.

4. Vorrichtung nach einem der Ansprüche 1 bis 3, **dadurch gekennzeichnet, dass** sie der Einheit von Spiegeln (110) vorgeordnet einen eine Adapterlinse formenden Meniskus (105) aufweist.

5. Vorrichtung nach einem der Ansprüche 1 bis 4, **dadurch gekennzeichnet, dass** die optische Relaiseinheit (130) geeignet ist, um ein Bild des im Unendlichen beobachteten Felds im Objektraum des Objektivs (145, 245) zu formen, um das Bild in der Bildbrennebene des Objektivs zu erhalten.

6. Vorrichtung nach einem der Ansprüche 1 bis 5, **dadurch gekennzeichnet, dass** die optische Relaiseinheit (130) und das Objektiv (145) geeignet sind, um eine Bildwiederaufnahme vor dem Brennpunkt der Einheit (110) von Spiegeln durchzuführen.

7. Vorrichtung nach einem der Ansprüche 1 bis 6, **dadurch gekennzeichnet, dass** sie mindestens einen ebenen Spiegel (125, 140) aufweist, der im optischen Pfad der von der Einheit von sphärischen Spiegeln (110) stammendem Lichtstrahlen angeordnet ist.
